# EUROPEAN PATENT APPLICATION

(11) **EP 4 570 601 A1**
(43) Date of publication of application: **18.06.2025**
(21) Application number: 22962581.9
(22) Date of filing: 12.12.2022
(51) Int. Cl.: B60T 8/17, B60T 13/74, B60T 17/22, B60W 30/06, B66F 11/04

(54) **ARMATURE BRAKING METHOD AND APPARATUS, DEVICE AND COMPUTER STORAGE MEDIUM**

(30) Priority: 19.10.2022 CN 202211279443
(71) Applicant: Hunan Sinoboom Intelligent Equipment Co., Ltd., Changsha, Hainan 410600 (CN)
(72) Inventor: LIU, Guoliang, Changsha, Hunan 410600 (CN); ZOU, Junhui, Changsha, Hunan 410600 (CN)
(74) Representative: Twelmeier Mommer & Partner
(86) International application number: PCT/CN2022/138310
(87) International publication number: WO 2024/082405

(57) **Abstract**

An armature braking method, the method comprising: when a parking instruction is received, controlling each armature to perform first braking after each armature satisfies braking conditions (S101); when it is detected that at least a preset number of armatures are successfully performing said first braking, delaying for a first preset time to control all armatures to perform second braking (S102); and when a preset condition is met, delaying for a second preset time to control all the armatures to perform third braking, the preset condition being when it is detected that a walking speed request is zero and an action enable is zero or when a fault alarm is detected (S103). By controlling each armature to perform braking after each armature satisfies braking conditions, the described method prevents the problem in the existing technology of unpowered movement or sideslip being produced when power output drops to zero even though braking conditions cannot be satisfied simultaneously, which is caused by it being necessary for all armatures to simultaneously satisfy braking conditions in order to perform braking. The present invention also relates to an armature braking apparatus, a device and a computer storage medium.

## Description

### CROSS-REFERENCE TO RELATED APPLICATION

This application claims the benefit of priority to Chinese Patent Application No. 202211279443.X filed with the China National Intellectual Property Administration on October 19, 2022 and entitled "ELECTRIC DRIVE BRAKING METHOD, APPARATUS, AND DEVICE, AND COMPUTER-READABLE STORAGE MEDIUM", the disclosure of which is incorporated herein by reference in its entirety.

### TECHNICAL FIELD

The present disclosure relates to the field of engineering technology, in particular to an electric drive braking method, apparatus, and device, and a computer-readable storage medium.

### BACKGROUND

In recent years, the requirements for construction safety and construction efficiency have been escalating, leading to more extensive application of aerial work platforms. Meanwhile, increasingly stringent national environmental regulations and enhanced admission criteria for construction sites in various regions based on ecological considerations have catalyzed the application and promotion of electric drives in aerial work platforms. However, in view of the uniqueness of the application of aerial work platforms, their control strategies cannot be simply derived from the strategies of electric vehicles. Instead, independent control methods are required to ensure the safety of their usage. At present, the main method for controlling the braking of electric drives involves implementing synchronous braking when all electric drives meet the braking conditions. However, according to this method, when the braking conditions cannot be fulfilled for some reason, the brake will remain in an open state, in which case the power output of motors may have dropped to zero, resulting in the vehicle experiencing unpowered coasting or lateral skidding on a slope, potentially leading to accidents.

### SUMMARY

An objective of the present disclosure is to provide an electric drive braking method, apparatus, and device, and a computer-readable storage medium, which are applied to the field of engineering technology. According to the present disclosure, each electric drive is controlled to independently initiate braking upon meeting their respective braking conditions, thereby avoiding the unpowered coasting or lateral skidding risks inherent in related technology that requires all electric drives to simultaneously meet braking conditions, resolving the hazardous scenario where power output has already dropped to zero while braking conditions cannot be satisfied simultaneously for all electric drives.

To achieve the above objective, the present disclosure provides an electric drive braking method, including:
in response to receiving a stop instruction, controlling each of a plurality of electric drives to perform first braking once the respective electric drive satisfies a braking condition;
in response to detecting that at least a predetermined number of the electric drives have successfully performed the first braking, controlling all the electric drives to perform second braking after a delay for a first predetermined duration; and
in response to a predetermined condition being satisfied, controlling all the electric drives to perform third braking after a delay for a second predetermined duration, where the predetermined condition is a travel speed request being detected to be zero and an action enable being detected to be zero, or a fault alarm being detected.

Optionally, in response to a predetermined condition being satisfied, controlling all the electric drives to perform third braking after a delay for a second predetermined duration includes:
controlling all the electric drives to perform the third braking after the delay for the second predetermined duration, where the second predetermined duration is greater than a maximum action stop duration.

Optionally, in response to detecting that at least a predetermined number of the electric drives have successfully performed the first braking, controlling all the electric drives to perform second braking after a delay for a first predetermined duration includes:
controlling all the electric drives to perform the second braking after the delay for the first predetermined duration, where the first predetermined duration is less than the second predetermined duration.

Optionally, in response to a predetermined condition being satisfied, controlling all the electric drives to perform third braking after a delay for a second predetermined duration includes:
in response to all the electric drives having successfully performed the second braking and the predetermined condition being satisfied, controlling all the electric drives to perform the third braking after the delay for the second predetermined duration, where the third braking does not produce an actual braking action.

Optionally, before in response to receiving a stop instruction, controlling each of a plurality of electric drives to perform first braking once the respective electric drive satisfies a braking condition, the method further includes:
adjusting a controller processing cycle such that a synchronization control error for the electric drives is confined not to exceed a third predetermined duration.

To achieve the above objective, the present disclosure further provides an electric drive braking apparatus, including:
a first braking module configured to, in response to receiving a stop instruction, control each of a plurality of electric drives to perform first braking once the respective electric drive satisfies a braking condition;
a second braking module configured to, in response to detecting that at least a predetermined number of the electric drives have successfully performed the first braking, control all the electric drives to perform second braking after a delay for a first predetermined duration; and
a third braking module configured to, in response to a predetermined condition being satisfied, control all the electric drives to perform third braking after a delay for a second predetermined duration, where the predetermined condition is a travel speed request being detected to be zero and an action enable being detected to be zero, or a fault alarm being detected.

Optionally, the third braking module includes:
a first timing unit configured to delay for the second predetermined duration after which all the electric drives are controlled to perform the third braking, where the second predetermined duration is greater than a maximum action stop duration.

Optionally, the second braking module includes:
a second timing unit configured to delay for the first predetermined duration after which all the electric drives are controlled to perform the second braking, where the first predetermined duration is less than the second predetermined duration.

To achieve the above objective, the present disclosure further provides an electric drive braking device, including:
a memory configured to store a computer program; and
a processor configured to implement the electric drive braking method according to any of the above embodiments when executing the computer program.

To achieve the above objective, the present disclosure further provides a computer-readable storage medium, storing computer-executable instructions which, when executed by a processor, cause the processor to implement the electric drive braking method according to any of the above embodiments.

The present disclosure provides an electric drive braking method, including: in response to receiving a stop instruction, controlling each of a plurality of electric drives to perform first braking once the respective electric drive satisfies a braking condition; in response to detecting that at least a predetermined number of the electric drives have successfully performed the first braking, controlling all the electric drives to perform second braking after a delay for a first predetermined duration; and in response to a predetermined condition being satisfied, controlling all the electric drives to perform third braking after a delay for a second predetermined duration, where the predetermined condition is a travel speed request being detected to be zero and an action enable being detected to be zero, or a fault alarm being detected.

It can be seen that, according to the present disclosure, each electric drive is controlled to independently initiate braking upon meeting their respective braking conditions, thereby avoiding the unpowered coasting or lateral skidding risks inherent in related technology that requires all electric drives to simultaneously meet braking conditions, resolving the hazardous scenario where power output has already dropped to zero while braking conditions cannot be satisfied simultaneously for all electric drives.

### BRIEF DESCRIPTION OF DRAWINGS

In order to more clearly explain the embodiments of the present disclosure or the technical scheme in the existing technology, the drawings needed in the description of the embodiments or the existing technology will be briefly introduced below. Obviously, the drawings in the following description are only embodiments of the present disclosure. For those of ordinary skill in the art, other drawings can be obtained according to the provided drawings without paying creative labor.
FIG. 1 is a flowchart of an electric drive braking method according to an embodiment of the present disclosure;
FIG. 2 is a schematic diagram showing a specific implementation of an electric drive braking method according to an embodiment of the present disclosure; and
FIG. 3 is a block diagram of an electric drive braking device according to an embodiment of the present disclosure.

### DETAILED DESCRIPTION

In order to make the objectives, technical schemes and advantages of the embodiments of the present disclosure clearer, the technical schemes in the embodiments of the present disclosure are clearly and completely described in the following with reference to the accompanying drawings in the embodiments of the present disclosure. It is obvious that the described embodiments are only some of the embodiments instead of all the embodiments of the present disclosure. All other embodiments obtained by those of ordinary skill in the art based on the embodiments of the present disclosure without inventive effort fall within the scope of the present disclosure.

The core of an electric drive platform typically involves three systems, namely an electric drive system, an electric control system, and a battery system. The electric drive system generally includes a motor, a transmission mechanism, a converter, etc. The electric control system generally includes a vehicle control unit, a motor control unit, etc. The battery system mainly provides the energy required for the operation of the entire platform. In the electric drive system, the motor, which may be typically referred to as an electric motor or a drive motor, mainly serves to convert the electrical energy stored in a battery into mechanical energy, providing the forward propulsion for electric vehicles. The motor mainly involves two parts, a stator and a rotor, and can be broadly categorized into two types: DC motors and AC motors.

The control of the platform is generally accomplished by the electric control system, which typically includes three subsystems: a vehicle control unit (VCU), a motor control unit (MCU), and a battery management system (BMS). The VCU acts as a control hub of all the electric control subsystems within the platform, regulating the operational status of the entire electric vehicle, receiving various operation instructions from an operator, diagnosing and analyzing the conditions of the entire vehicle and its components, and controlling the actions of the subsystem controllers. The MCU, by receiving driving control commands from the VCU, regulates the motor to output the specified torque and speed, thereby driving the platform. The BMS is primarily responsible for collecting and monitoring data such as voltage, current, and temperature of the battery system, realizing functions such as battery status monitoring and analysis, battery safety protection, energy control management, and information management.

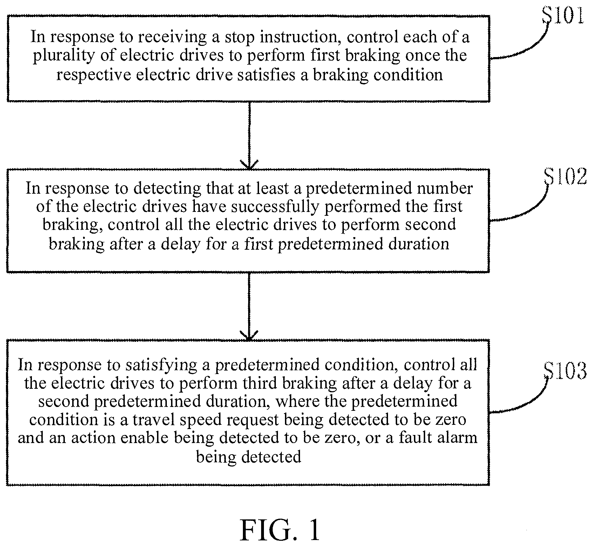

Referring to FIG. 1, FIG. 1 is a flowchart of an electric drive braking method according to an embodiment of the present disclosure. The method includes the following steps.

At S101, in response to receiving a stop instruction, each of a plurality of electric drives is controlled to perform first braking once the respective electric drive satisfies a braking condition.

It can be understood that in response to receiving a stop instruction, each electric drive is controlled to perform braking, and any one of the electric drives can perform braking once it satisfies the braking condition, without waiting for all electric drives to simultaneously satisfy the braking condition. This avoids the issue where the braking condition cannot be simultaneously met by all the electric drives but the power output of the motors in the electric drives have already dropped to zero, leading to unpowered coasting or lateral skidding.

The platform in this embodiment may be a platform propelled by electric drives. This embodiment does not limit the number of electric drives on the platform, and typically, four electric drives may be used to propel the platform. Each electric drive may typically include a motor controlled by an MCU. The relative synchronization control of the four MCUs is ensured to enable relatively synchronized start and stop of the four motors. This embodiment does not limit the way to control the propulsion of the electric drive platform, which may generally be controlled by adjustable mechanical structures, such as a handle or a foot pedal. In this embodiment, a handle may be used to control the propulsion of the platform. The handle may generally be equipped with an angle sensor and/or a force sensor. When the operator releases or grips the handle, the corresponding sensor transmits real-time angular position or force magnitude data to the VCU. The VCU can interpret the operator's intent based on the aforementioned data and control the change in the output current of the battery. The magnitude of the current affects the operating speed of the motor, thereby controlling the operation of the motor and, in turn, the movement or stop of the platform.

This embodiment does not limit how to trigger the stop instruction, which may be triggered when detecting conditions such as the release of the driving handle, a fault in an electric drive sensor, an electric drive temperature alarm, or an undervoltage alarm. Upon receiving the triggered stop instruction, the VCU stops the input of current and controls each of the four electric drives to perform the first braking independently once the respective electric drive satisfies the braking condition. At this point, any one of the four electric drives can perform braking once it satisfies the braking condition, without waiting for all electric drives to satisfy the braking condition. This embodiment does not limit the specific content of the braking condition, which may be set according to actual conditions. Generally, the braking condition may be that the motor of the respective electric drive has stopped operating. Further, to ensure relatively synchronized control of the four electric drives, in this embodiment, the processing cycle of the control units may be adjusted to control the synchronization control error of the four electric drives within a third predetermined duration. This embodiment does not limit the value of the third predetermined duration, which may be set according to actual working conditions, and is generally set to not exceed 50 milliseconds.

At S102, in response to detecting that at least a predetermined number of the electric drives have successfully performed the first braking, all the electric drives are controlled to perform second braking after a delay for a first predetermined duration.

It can be understood that, to enhance the overall safety of the braking method, a second braking may be implemented based on the first braking, namely, in response to detecting that at least a predetermined number of the electric drives have successfully performed the first braking, all the electric drives are controlled to perform second braking after a delay for a first predetermined duration.

The four electric drives are controlled to perform the first braking independently once the respective electric drive satisfies the braking condition. If one or more electric drives fail to satisfy the braking condition and thus cannot successfully perform the first braking, the overall braking torque of the vehicle may be insufficient, leading to coasting issues. To address this, the second braking is introduced, namely, in response to detecting that at least a predetermined number of the electric drives have successfully performed the first braking, all the electric drives are controlled to perform second braking after a delay for a first predetermined duration. This embodiment does not limit the value of the first predetermined duration, which is generally set to 20 milliseconds, but the actual delay time may be determined based on specific conditions. This embodiment does not limit the value of the predetermined number, which may be set according to the total number of electric drives or actual working conditions. Generally, when the platform is propelled by four electric drives, the predetermined number may be set to three. When the platform is propelled by six electric drives, the predetermined number may be set to four. If the total number of electric drives is four, when the VCU detects that at least three electric drives have satisfied the braking condition and successfully performed the first braking, regardless of whether the fourth electric drive satisfies the braking condition, all four electric drives are forced to perform the second braking after delaying for the first predetermined duration. This addresses the issue of insufficient braking force or coasting caused by a certain electric drive failing to brake due to various reasons, while also ensuring synchronized braking of the four electric drives.

At S103, in response to a predetermined condition being satisfied, all the electric drives are controlled to perform third braking after a delay for a second predetermined duration, where the predetermined condition is a travel speed request being detected to be zero and an action enable being detected to be zero, or a fault alarm being detected.

It can be understood that the third braking in this embodiment serves as the overall safety measure in the braking method. Regardless of whether the first braking or the second braking is successfully triggered, when the predetermined condition is satisfied, all the electric drives are controlled to perform the third braking after a delay of the second predetermined duration, where the predetermined condition is a travel speed request being detected to be zero and an action enable being detected to be zero, or a fault alarm being detected.

This embodiment does not limit the specific content of the predetermined condition, which may generally be that a travel speed request is detected to be zero and an action enable is detected to be zero, or that a fault alarm is detected. The trigger for the travel speed request being zero and the action enable being zero may be the action of releasing the handle. When the handle is fully released, the speed request of the motors becomes zero, and the action enable applied to the handle becomes zero, with both conditions required to exist simultaneously. Further, this embodiment does not limit the specific faults that trigger the fault alarm, which may include sensor faults, temperature alarms, or under/over-voltage alarms, excluding speed reduction and power reduction faults.

This embodiment does not limit the value of the second predetermined duration. Generally, as the overall safety measure of the braking scheme, the third braking may be performed after the first braking and the second braking. That is, the second predetermined duration may be greater than the first predetermined duration. Moreover, to ensure the stability of the third braking, the second predetermined duration is generally set to be greater than a maximum action stop duration in the system design. Typically, the maximum action stop duration in the system design is 3 seconds, and the second delay duration may be set to 3.1 seconds. In this case, regardless of whether the condition that at least a predetermined number of electric drives among the four electric drives successfully perform the first braking is met, thereby triggering all electric drives to perform the second braking after a delay for the first predetermined duration, or the condition that at least a predetermined number of electric drives among the four electric drives successfully perform the first braking is not met, thereby preventing the second braking of all electric drives, all electric drives are uniformly controlled to perform the third braking after a delay for the second predetermined duration. This serves as the final protection condition to prevent the vehicle from being in a state of no power and no braking torque for an extended period, and to avoid safety incidents. Further, to prevent unnecessary forced braking, if the second braking of all electric drives is successfully performed, the third braking may be a control output braking, and no actual braking action is performed.

According to this embodiment, each electric drive is controlled to independently initiate braking upon meeting their respective braking conditions, thereby avoiding the unpowered coasting or lateral skidding risks inherent in related technology that requires all electric drives to simultaneously meet braking conditions, resolving the hazardous scenario where power output has already dropped to zero while braking conditions cannot be satisfied simultaneously for all electric drives.

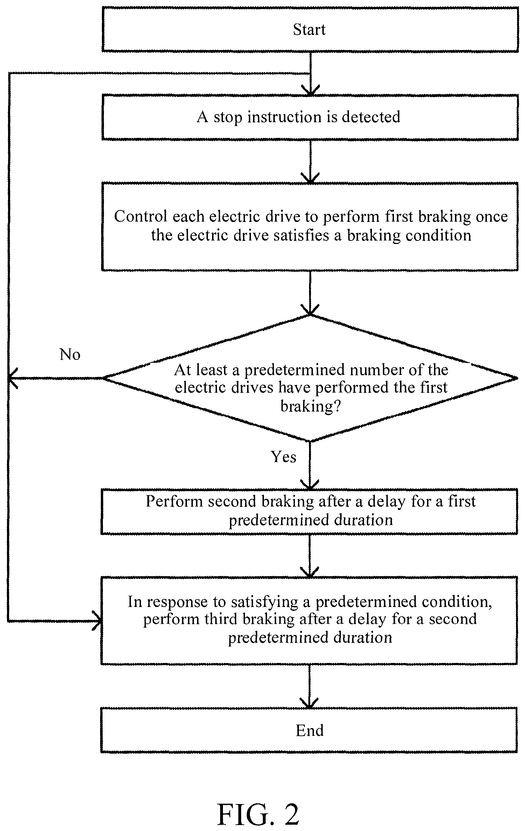

Referring to FIG. 2, FIG. 2 is a schematic diagram showing a specific implementation of an electric drive braking method according to an embodiment of the present disclosure. Herein, the number of electric drives of the platform may be four, the predetermined number may be three, the first predetermined duration may be 20 milliseconds, and the second predetermined duration may be 3.1 seconds. This specific embodiment may include the following steps.
1. In response to receiving a stop instruction, each of the four electric drives is controlled to perform first braking independently once the respective electric drive satisfies a braking condition.
2. It is detected whether at least three of the electric drives have successfully performed the first braking.
3. If yes, all the four electric drives are controlled to perform second braking after a delay for 20 milliseconds, and proceed to 5.
4. If no, proceed to 5.
5. Once a predetermined condition is met, all the four electric drives are forced to perform third braking after a delay for 3.1 seconds.

Hereinafter, an electric drive braking apparatus and device, and a storage medium according to embodiments of the present disclosure will be described, and the electric drive braking apparatus and device, and storage medium described below and the electric drive braking method described above can be cross-referenced in correspondence with each other.

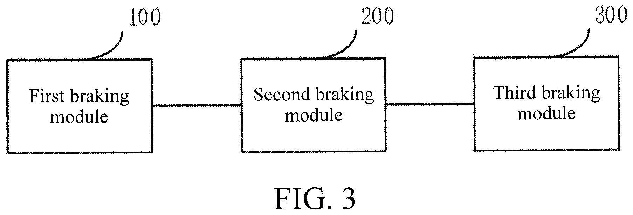

Referring to FIG. 3, FIG. 3 is a block diagram of an electric drive braking device according to an embodiment of the present disclosure. The apparatus may include:
a first braking module 100 configured to, in response to receiving a stop instruction, control each of a plurality of electric drives to perform first braking once the respective electric drive satisfies a braking condition;
a second braking module 200 configured to, in response to detecting that at least a predetermined number of the electric drives have successfully performed the first braking, control all the electric drives to perform second braking after a delay for a first predetermined duration; and
a third braking module 300 configured to, in response to a predetermined condition being satisfied, control all the electric drives to perform third braking after a delay for a second predetermined duration, where the predetermined condition is a travel speed request being detected to be zero and an action enable being detected to be zero, or a fault alarm being detected.

Based on the above-described embodiments of the present disclosure, each electric drive is controlled to independently initiate braking upon meeting their respective braking conditions, thereby avoiding the unpowered coasting or lateral skidding risks inherent in related technology that requires all electric drives to simultaneously meet braking conditions, resolving the hazardous scenario where power output has already dropped to zero while braking conditions cannot be satisfied simultaneously for all electric drives.

Based on the above-described embodiments, the third braking module 300 includes:
a first timing unit configured to delay for the second predetermined duration after which all the electric drives are controlled to perform the third braking, where the second predetermined duration is greater than a maximum action stop duration.

Based on the above-described embodiments, the second braking module 200 includes:
a second timing unit configured to delay for the first predetermined duration after which all the electric drives are controlled to perform the second braking, where the first predetermined duration is less than the second predetermined duration.

Based on the above-described embodiments, the third braking module 300 includes:
a braking unit configured to, in response to all the electric drives having successfully performed the second braking and the predetermined condition being satisfied, control all the electric drives to perform the third braking after a delay for the second predetermined duration, where the third braking does not produce an actual braking action.

Based on the above-described embodiments, the apparatus may further include:
a synchronization unit configured to adjust a controller processing cycle such that a synchronization control error for the electric drives is confined not to exceed a third predetermined duration.

Based on the above-described embodiments, the present disclosure also provides an electric drive braking device. The electric drive braking device may include a memory and a processor, where a computer program is stored in the memory, and when the processor calls the computer program in the memory, the steps provided in the above embodiments can be implemented. Certainly, the device may also include various necessary network interfaces, power supplies and other components.

The present disclosure also provides a computer-readable storage medium that stores a computer program, which, when executed by an execution terminal or a processor, can implement the electric drive braking method according to the embodiments of the present disclosure. The storage medium may include: various media that can store program codes, such as a USB flash drive, a mobile hard disk, a read-only memory (ROM), a random access memory (RAM), a magnetic disk or an optical disk.

Specific examples are used to explain the principle and implementation of the present disclosure, and the embodiments are described in a progressive way, with the description of each embodiment focusing on its differences from other embodiments. The common and similar aspects between the embodiments can be cross-referenced with each other. For the apparatus disclosed in the embodiments, the description of the corresponding method can be referred to. The description of the above embodiments is only used to help understand the method and core idea of the present disclosure. For those of ordinary skills in the art, without departing from the principle of the present disclosure, some improvements and modifications can be made to the present disclosure, and these improvements and modifications also fall within the scope of protection of the claims of the present disclosure.

It is also to be noted that the relative terms herein, such as "first" and "second", are used only to distinguish one entity or operation from another entity or operation, without necessarily requiring or implying any such actual relationship or sequence between these entities or operations. In addition, the terms "comprise", "include" or any variation thereof are intended to cover a non-exclusive inclusion, such that a process, method, article, or device that includes a series of elements not only includes those listed elements but also includes other elements not expressly listed or further includes elements inherent to such a process, method, article, or device. Without additional constraints, an element preceded by "comprises/includes a/an" does not preclude the existence of additional identical elements in the process, method, article, or apparatus that comprises/includes the element.

## Claims

1. An electric drive braking method, comprising:
in response to receiving a stop instruction, controlling each of a plurality of electric drives to perform first braking once the respective electric drive satisfies a braking condition;
in response to detecting that at least a predetermined number of the electric drives have successfully performed the first braking, controlling all the electric drives to perform second braking after a delay for a first predetermined duration; and
in response to a predetermined condition being satisfied, controlling all the electric drives to perform third braking after a delay for a second predetermined duration, wherein the predetermined condition is a travel speed request being detected to be zero and an action enable being detected to be zero, or a fault alarm being detected.

2. The method of claim 1, wherein in response to a predetermined condition being satisfied, controlling all the electric drives to perform third braking after a delay for a second predetermined duration comprises:
controlling all the electric drives to perform the third braking after the delay for the second predetermined duration, wherein the second predetermined duration is greater than a maximum action stop duration.

3. The method of claim 1, wherein in response to detecting that at least a predetermined number of the electric drives have successfully performed the first braking, controlling all the electric drives to perform second braking after a delay for a first predetermined duration comprises:
controlling all the electric drives to perform the second braking after a delay for the first predetermined duration, wherein the first predetermined duration is less than the second predetermined duration.

4. The method of claim 1, wherein in response to a predetermined condition being satisfied, controlling all the electric drives to perform third braking after a delay for a second predetermined duration comprises:
in response to all the electric drives having successfully performed the second braking and the predetermined condition being satisfied, controlling all the electric drives to perform the third braking after the delay for the second predetermined duration, wherein the third braking does not produce an actual braking action.

5. The method of claim 1, wherein before in response to receiving a stop instruction, controlling each of a plurality of electric drives to perform first braking once the respective electric drive satisfies a braking condition, the method further comprises:
adjusting a controller processing cycle such that a synchronization control error for the electric drives is confined not to exceed a third predetermined duration.

6. An electric drive braking apparatus, comprising:
a first braking module configured to, in response to receiving a stop instruction, control each of a plurality of electric drives to perform first braking once the respective electric drive satisfies a braking condition;
a second braking module configured to, in response to detecting that at least a predetermined number of the electric drives have successfully performed the first braking, control all the electric drives to perform second braking after a delay for a first predetermined duration; and
a third braking module configured to, in response to a predetermined condition being satisfied, control all the electric drives to perform third braking after a delay for a second predetermined duration, wherein the predetermined condition is a travel speed request being detected to be zero and an action enable being detected to be zero, or a fault alarm being detected.

7. The apparatus of claim 6, wherein the third braking module comprises:
a first timing unit configured to delay for the second predetermined duration after which all the electric drives are controlled to perform the third braking, wherein the second predetermined duration is greater than a maximum action stop duration.

8. The apparatus of claim 6, wherein the second braking module comprises:
a second timing unit configured to delay for the first predetermined duration after which all the electric drives are controlled to perform the second braking, wherein the first predetermined duration is less than the second predetermined duration.

9. An electric drive braking device, comprising:
a memory configured to store a computer program; and
a processor configured to implement the electric drive braking method of any one of claims 1 to 5 when executing the computer program.

10. A computer-readable storage medium, storing computer-executable instructions which, when executed by a processor, cause the processor to implement the electric drive braking method of any one of claims 1 to 5.
